# EUROPEAN PATENT SPECIFICATION

(11) **EP 4 506 774 B1**
(45) Date of publication and mention of the grant of the patent: **18.02.2026**
(21) Application number: 24175469.6
(22) Date of filing: 13.05.2024
(51) Int. Cl.: G05D 109/12, G05D 1/246, G05D 105/85

(54) **ROBOT CONTROL METHOD, ROBOT, AND STORAGE MEDIUM**
ROBOTERSTEUERUNGSVERFAHREN, ROBOTER UND SOWIE SPEICHERMEDIUM
PROCÉDÉ DE COMMANDE DE ROBOT, ROBOT ET SUPPORT DE MEMORISATION D'INFORMATIONS

(30) Priority: 09.08.2023 CN 202311000821
(43) Date of publication of application: 12.02.2025
(73) Proprietor: Beijing Xiaomi Robot Technology Co., Ltd., Beijing 100176 (CN)
(72) Inventor: SHANG, Zihan, Beijing, 100176 (CN); DU, Kun, Beijing, 100176 (CN); LIU, Kai, Beijing, 100176 (CN); WEN, Linfeng, Beijing, 100176 (CN); DING, Song, Beijing, 100176 (CN); YI, Peng, Beijing, 100176 (CN); BAI, Zhongxing, Beijing, 100176 (CN)
(74) Representative: Dehns Germany Partnerschaft mbB

(56) References cited:
- CN-A- 110 858 075
- CN-A- 111 750 862
- CN-A- 111 780 775

## Description

### TECHNICAL FIELD

The disclosure relates to the field of bio-robots, in particular to a robot, a robot control method and apparatus, and a storage medium.

### BACKGROUND OF THE INVENTION

With development of a robot technology, robots replace manpower in more and more scenes to implement operations in corresponding scenes.

CN111780775A discloses a method for path planning, and in particularly discloses the following contents: get the starting position and target position; If it is determined that the starting position and the target position are not in the same area, determine the distance between the first area where the starting position is located and the second area where the target position is located according to a pre-built cross-area topology map Cross-regional path; a target path is determined according to the starting position, the target position, and the cross-regional path.

CN111750862A discloses a robot path planning method, and in particularly discloses the following contents: obtain the initial position and target position of the robot; if the initial location and the target location are located in different areas, the information of the initial area transfer point located in the initial area is acquired; wherein the initial area is the area where the initial location is located, and the initial area transfer point is An area transfer point located in the initial area, where the area transfer point is a node located on the area boundary in the area topology map and connected to other areas adjacent to the area; according to the information of the initial area transfer point and the pre-stored cross-area topology map, determine at least one cross-domain path from the initial area transfer point to a target area, where the target area is the area where the target location is located The cross-regional topological map is a topological map that includes nodes and edges connecting any two of the regional transit points in different regions; according to the area topology map of the initial area, the initial location, and the cross-domain path, at least one corresponding initial area sub-path is determined for each cross-domain path in the initial area, wherein each The initial area sub-path corresponding to the cross-domain path is a path that takes the initial position as a starting point and takes the starting point of the cross-domain path as an end point; according to the area topology map of the target area, the target location and the cross-domain path, at least one corresponding target area sub-path is determined for each cross-domain path in the target area, wherein each The target area sub-path corresponding to the cross-domain path is a path that takes the end point of the cross-domain path as a starting point and the target location as an end point; determine a target path from the initial position to the target position according to the cross-domain path, the initial area sub-path , and the target area sub-path.

CN110858075A discloses a cross-region method for mobile robots, and in particularly discloses the following contents: after the positioning position of the mobile robot in the first map is at the preset handover position corresponding to the second map, determine the jump position corresponding to the handover position in the second map, the first map is The map used for positioning by the mobile robot, the first map and the second map correspond to different positioning methods; determining the jump position as the positioning position of the mobile robot in the second map, and switching the positioning method of the mobile robot to the positioning method corresponding to the second map.

### SUMMARY OF THE INVENTION

In order to implement a cross-map continuous operation by a robot and improve the operation capability and effect of the robot in a large environment scene, examples of the disclosure provide a robot, a robot control method and apparatus, and a storage medium.

According to a first aspect of the invention, there is provided a robot control method, as defined by claim 1. In some examples, determining, according to the target position information of the current operation of the robot, the target operation map including the target position information from the plurality of pre-constructed operation maps includes:
obtaining map information of a current operation map of the robot and the target position information; and
determining, in a case that the map information of the current operation map does not include the target position information, the target operation map including the target position information by traversing, according to the target position information, other operation maps.

In some examples, controlling the robot to move to the transfer position and switching the maps, until the robot moves to the target operation map includes:
moving to each transfer position in sequence based on the map path, and switching, in each transfer position, the current operation map to an operation map associated with the current operation map, until the robot moves to the target operation map.

In some examples, controlling the robot to move to the operation destination according to the map information of the target operation map and the target position information includes:
transforming the target position information into target coordinate information in a map coordinate system; and
controlling, according to the map information of the target operation map and the target coordinate information, the robot to move to the operation destination corresponding to the target coordinate information.

In some examples, a process of pre-establishing the map connection relationship includes:
constructing and obtaining the plurality of operation maps, where each operation map includes map coordinate information and a plurality of feature point information on the operation map;
performing, for any two operation maps, feature matching according to the feature point information included in each of the two operation maps, and determining, in a case that at least one group of feature points are matched, the two operation maps as two associated operation maps; and
determining, for the two associated operation maps, the common region between the two operation maps according to the matched feature points.

According to a second aspect of the invention, there is provided a robot as defined by claim 6.

According to a further aspect of the invention, there is provided a non-transitory storage medium as defined by claim 11.

The robot control method according to the examples of the disclosure includes determining the target operation map from the plurality of operation maps according to the target position information of the current operation of the robot, determining the transfer position of movement of the robot based on the pre-established map connection relationship, controlling the robot to move to the transfer position and switching the maps, until the robot moves to the target operation map, and controlling the robot to move to the operation destination according to the map information of the target operation map and the target position information. In the examples of the disclosure, by dividing a large environment operation range, the robot operates based on small maps, so map constructing and operation pressure of the robot at a time is relieved, single-machine cost is reduced, and navigation accuracy and stability of the robot are improved. Furthermore, the robot may implement a cross-map continuous operation, the continuous operation in the entire region can be implemented merely by single robot, robot deployment cost is reduced, and operation stability is improved.

### BRIEF DESCRIPTION OF DRAWINGS

In order to more clearly describe examples of the disclosure or technical solutions in related art, the accompanying drawings needed by the description in the examples or in related art will be briefly introduced below. Apparently, the accompanying drawings in the following description are some examples of the disclosure. Those ordinarily skilled in the art may also obtain other accompanying drawings according to these accompanying drawings without making creative work.
Figure 1 is a schematic diagram of a robot according to some examples of the disclosure.
Figure 2 is a flowchart of a robot control method according to some examples of the disclosure.
Figure 3 is a schematic principle diagram of a robot control method according to some examples of the disclosure.
Figure 4 is a schematic principle diagram of a robot control method according to some examples of the disclosure.
Figure 5 is a flowchart of a robot control method according to some examples of the disclosure.
Figure 6 is a flowchart of a robot control method according to some examples of the disclosure.
Figure 7 is a flowchart of a robot control method according to some examples of the disclosure.
Figure 8 is a flowchart of a robot control method according to some examples of the disclosure.
Figure 9 is a structural block diagram of a robot control apparatus according to some examples of the disclosure.
Figure 10 is a structural block diagram of a robot according to some examples of the disclosure.

### DETAILED DESCRIPTION OF THE INVENTION

The technical solutions of the disclosure are clearly and completely described in the following with reference to the accompanying drawings. Apparently, the described examples are some rather than all of the examples of the disclosure. All other examples obtained by those ordinarily skilled in the art based on the examples of the disclosure without making creative work fall within the protection scope of the disclosure. Besides, technical features involved in different examples of the disclosure described below may be combined mutually without a conflict between one another.

With increasingly mature development of a simultaneous localization and mapping (SLAM) technology, autonomous localization and navigation capabilities of robots are higher and higher, and nowadays, the robots have been capable of operating by replacing manpower in many fields.

For example, taking a robot vacuum cleaner commonly used in a household scene as an example, the robot vacuum cleaner, when entering a new environment for the first time, performs map constructing through the SLAM technology to obtain map information. Thus, in a follow-up working process, the map information may be loaded to achieve autonomous navigation so as to complete a whole house cleaning operation.

In an indoor operation scene, an operation range of the robot is small, so performance of the robot can meet map constructing and operation of the entire region. However, for a robot for an outdoor operation, for example, taking a bio-robot for a patrol operation as an example, an operation region of the robot is usually an industrial park, an outdoor street and a wide open scene. A length of the operation region is usually a few kilometers or even a dozen kilometers. This type of a large-environment operation scene makes a higher requirement for map constructing and continuous operation capabilities of the robot. As an operation region range is quite large and a robot is limited by its own computing power, so the robot can hardly complete map constructing and continuous operation in the entire region, resulting in limited operation capability of the robot in the large environment scenes.

In related art, for a large environment operation scene, an operation region is manually divided into a plurality of small regions in general, and a plurality of robots are used for operating in partition, namely, each robot is in charge of operation of corresponding small region. In this approach, each robot is merely in charge of one region and does not have cross-region operation capability, resulting in that when the robot in a certain region has a failure, the robots in the other regions cannot directly enter this region for operating.

In some other related arts, a plurality of small maps are constructed respectively in a partition map-constructing mode, then a large map of the entire region is obtained by using a map stitching algorithm. The robot can implement a continuous operation in the entire region based on the large map during operation.

However, in this case, the requirement for robot hardware performance is quite high. The robot needs to load total map data every time it operates, and internal storage and computing power cost of the robot is extremely high, resulting in cost surge of the robot. More importantly, the larger the map of operation of the robot is, the worse the location drift degree is. During long-time continuous operation, with accumulation of location errors, navigation failure of the robot is possibly caused. In addition, the larger the map is, the greater the probability of occurrence of a similar environment is and the higher the possibility of occurrence of accidents in an operation process is, and operation stability of the robot is poor.

It can be seen from the above that in traditional solutions, operation accuracy and stability of the robot in the large environment scene are poor, the requirement for hardware is high, and cost of the whole machine is high.

Based on this, examples of the disclosure provide a robot, a robot control method and apparatus, and a non-transitory storage medium, and aim to implement a cross-map continuous operation by the robot, improving operation capability and stability of the robot in a large environment scene.

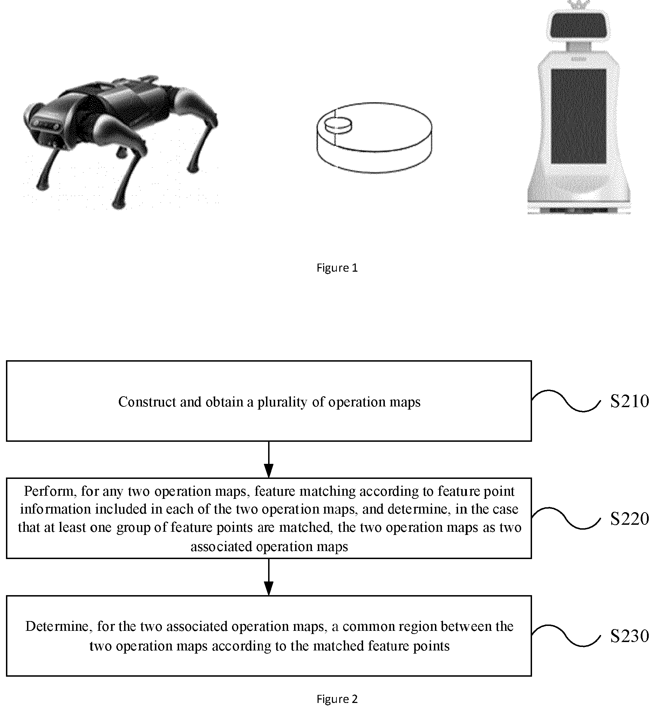

Figure 1 shows some example diagrams of a robot according to an example of the disclosure. The description is made below with reference to Figure 1. As shown in Figure 1, the robot of the disclosure may be any robot with movement capability, for example, a bio-robot, a cleaning robot, a mobile robot and the like.

Taking the bio-robot as an example, the bio-robot has excellent motion balance capability and rich operability. The bio-robot includes a biped robot and a quadruped robot. The biped robot is a humanoid robot, lower limbs of which can swing like people to implement operations such as walk, run, squat and jump, and upper limbs of which can imitate human arms to implement operations such as swinging arms and grabbing. The quadruped robot is a robot imitating a tetrapod, four limbs of which can swing like an animal to implement operations such as walk, run and jump. The quadruped robot usually has good motion balance capability.

The bio-robot has good motion performance and obstacle crossing ability, so the bio-robot is more suitable for an operation scene in a large environment range. The robot of the examples of the disclosure may take the bio-robot as an example.

In some examples, the disclosure provides a robot control method. The robot control method may be applied to the robot in any above form. A process of the control method may be performed and processed by the robot.

It can be understood that during performing an autonomous navigation operation, the robot needs to complete map constructing for an environment where it is located in advance, so as to obtain map information of the environment where it is located, and to implement navigation movement in any position within the map according to the map information.

In the examples of the disclosure, for the large environment operation scene, the entire operation range may be divided into a plurality of map regions, so that during map constructing, a corresponding operation map is obtained for each map region, namely, a map range of the entire operation region is divided into a plurality of operation maps.

Besides, each operation map at least has a common region with another operation map. The common region may be understood as an overlapping region of two or more maps, and thus each feature point in the common region also belongs to two associated operation maps.

After map constructing of these map regions is completed and the plurality of operation maps are obtained, association further needs to be performed for the plurality of operation maps, and thus a map connection relationship between these operation maps is established. The map connection relationship refers to a topological relationship between the plurality of operation maps, which is used for recoding an association relationship between each operation map and the other operation maps and the common region between the associated operation maps.

During actual operation, in a case of needing to perform cross-map operation, the robot can move into the common region between a current operation map and an operation map associated with the current operation map, and switch the current operation map to the associated operation map, so the robot can continue to operating in the associated operation map so as to achieve the cross-map operation capability.

It can be seen from the above that the robot control method according to the examples of the disclosure includes two stages: one is a preparation stage, which implements map constructing of each map region obtained by dividing, and establishment of the map connection relationship; and the other one is an operation stage, which can implement the cross-map continuous operation according to the plurality of operation maps and the map connection relationship obtained above.

For the sake of understanding and description, a process of the method in the preparation stage is described first and then a process of the method in the operation stage is described in the following of the disclosure.

### 1) Preparation stage

As shown in Figure 2, in some examples, in the robot control method according to an example of the disclosure, a process of pre-establishing the map connection relationship includes steps S210, S220 and S230.

Step S210 includes constructing and obtaining a plurality of operation maps.

It can be known from the above that in the examples of the disclosure, the entire operation range needs to be divided into a plurality of map regions, then constructing is performed respectively to obtain the operation map corresponding to each map region, and the common region is needed between adjacent map regions.

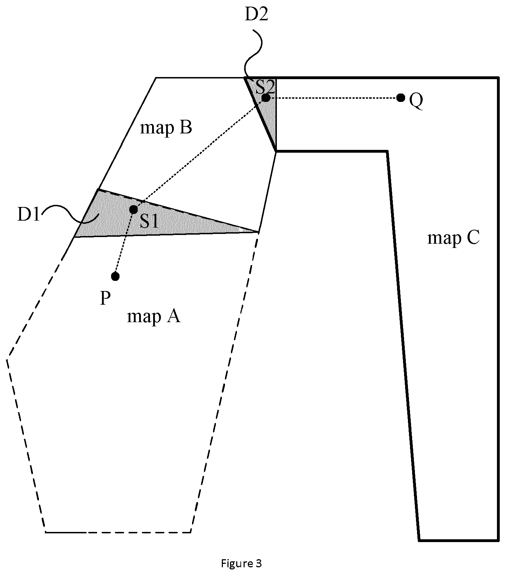

For example, in an example shown in Figure 3, the entire operation range is shown in Figure 3. The entire operation range may be divided into three map regions, namely, a full thick line region, a full thin line region and a dotted line region. A common region D1 exists between the dotted line region and the full thin line region. A common region D2 exists between the full thin line region and the full thick line region. There is no common region between the dotted line region and the full thick line region.

It can be understood that for a map region dividing mode, a worker may perform dividing based on manual experience or in combination with a specific scene. For example, a dividing basis of the map regions includes but is not limited to a robot operation content, an environment feature, obstacle distribution and the like, which is not described in detail by the disclosure.

After dividing of the map regions is completed, map constructing may be performed for each map region by the robot, so as to obtain the operation map corresponding to each map region.

It is worth noting that a process of map constructing may be to construct the map in each map region in sequence by the same robot, or a plurality of robots may be used for each constructing the map for one map region. For example, in the example shown in Figure 3, the same robot may be used for constructing the map for each map region in sequence, so as to obtain three operation maps in sequence. Alternatively, three robots may be used for each constructing the map for one map region, so as to obtain a total of three operation maps, which is not limited by the disclosure.

It can be understood that the process of map constructing by the robot may be implemented by using an SLAM algorithm in related art. Map constructing may be completed by using hardware such as a camera, a radar and an inertial navigation system in combination with the corresponding algorithm, so as to obtain the corresponding operation maps, which can be understood by those skilled in the art with reference to the related art and will not be described in detail by the disclosure.

In the examples of the disclosure, each operation map obtained by map constructing includes map coordinate information and a plurality of feature point information on the operation map.

The map coordinate information refers to information for directly or indirectly recoding a coordinate of each point on the map. For example, in an example, the map coordinate information includes a coordinate of a point at a lower left corner of the operation map and a map scale, and thus coordinate information of each point on the operation map can be obtained by calculation.

Besides, it may be understood that for robot localization and navigation, a mapping relation between a map coordinate system and a world coordinate system is calibrated in advance. Mutual transformation of a point on the map between the world coordinate system and the map coordinate system may be implemented according to the mapping relation.

In other words, according to the map coordinate information of the operation map, coordinate information of each point on the operation map in the world coordinate system may be obtained, or coordinate information of each point on the operation map in the map coordinate system may also be obtained.

The feature point information refers to coordinate information of feature points with a distinct feature on the map. It can be understood that in the process of map constructing by the robot, a laser radar or a visual system can sense an object and an obstacle in the surroundings, and thus coordinate information corresponding to the feature points extracted from the object or the obstacle is the feature point information described in the examples of the disclosure. It can be understood that in general, the point with the distinct feature on the operation map may be selected as the feature points, for example, a guideboard, a dustbin and the like.

In a scene of the example shown in Figure 3, after map constructing is performed on the three map regions respectively through the above mentioned map constructing process, the three operation maps may be obtained and are respectively: the operation map "map A" corresponding to the dotted line region, the operation map "map B" corresponding to the full thin line region and the operation map "map C" corresponding to the full thick line region.

Those skilled in the art can understand that Figure 3 is an example of the disclosure. In other implementation scenes, shapes of the operation maps may be in other forms and the number of **the operation** maps may be different from this, which are not described in detail by the disclosure.

Step S220 includes performing, for any two operation maps, feature matching according to the feature point information included in each of the two operation maps, and determining, in a case that at least one group of feature points are matched, the two operation maps as two associated operation maps.

In the examples of the disclosure, after the plurality of operation maps are constructed and obtained through the above mentioned process, the association relationship between these operation maps needs to be determined, and the association relationship is the map connection relationship described in the disclosure.

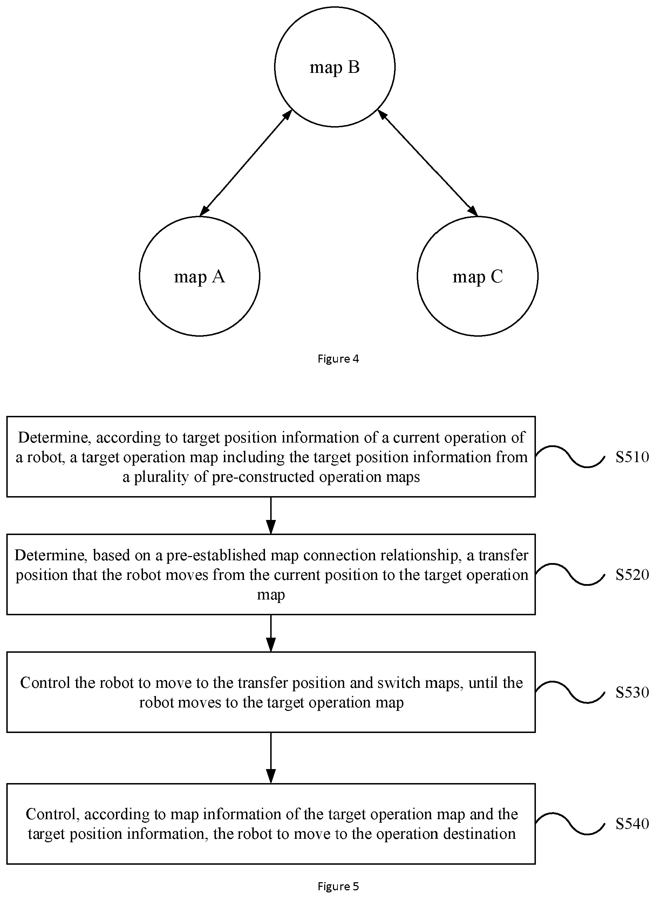

In some examples, the map connection relationship may be determined in a manual association mode. For example, in the scene of the example shown in Figure 3, it is discovered by people's observation that the common region D1 exists between the map A and the map B and the common region D2 exists between the map B and the map C, so it may be determined that the map A is associated with the map B and the map B is further associated with the map C, and the obtained map connection relationship may be shown in Figure 4.

However, there are problems of low efficiency and high error rate in the manual association mode. It can be understood that when determining whether two maps are associated, it is necessary to manually look for whether the same common region exists between two maps. The whole process is very inefficient. Furthermore, for the case of a large number of operation maps (for example, dozens of maps), more similar objects may exist on the maps, and there is a higher risk of manual misassociation.

Based on this, in some examples of the disclosure, association of the operation maps may be implemented autonomously by the robot, so corresponding map connection relationship may be obtained. A basis for determining the map connection relationship is the common region between the operation maps.

With reference to the example shown in Figure 3, the common region D1 exists between the map A and the map B, so each point in the common region D1 belongs to both the map A and the map B. It can thus be seen that for any two operation maps, if there are the same feature points between the two operation maps, it indicates that the two operation maps include the same object and that the common region exists between the two operation maps, and the two operation maps are two associated operation maps.

Based on this principle, feature point matching may be performed for any two operation maps of the plurality of operation maps obtained above. It indicates that the two operation maps are associated in a case that at least one group of feature points are matched.

For example, in an example, taking the map A and the map B in Figure 3 as an example, a distance between each feature point on the map A and each feature point on the map B may be calculated according to each feature point information on the map A and each feature point information on the map B. In a case that the distance between at least one group of feature points is smaller than a preset distance threshold, it indicates that the feature point on the map A and the feature point on the map B correspond to the same object and thus indicates that the common region exists between the map A and the map B and the map A is associated with the map B.

A value of the preset distance threshold may be set according to a robot localization error, for example, may be 0.1 m to 0.5 m.

Through the above process, it may be determined respectively whether each operation map is associated with another operation map, so that the final map connection relationship may be obtained. For example, in the example shown in Figure 3, the obtained map connection relationship may be shown in Figure 4.

Step S230 includes determining, for the two associated operation maps, the common region between the two operation maps according to the matched feature points.

It can be understood that through the above process of step S220, it is determined that the two operation maps with the at least one group of matched feature points are associated, but a common region range between the two operation maps is not known. Thus, in the example of the disclosure, after the map connection relationship is determined, for the two associated operation maps, the common region range between them also needs to be further determined.

For example, in some examples, still taking the map A and the map B in Figure 3 as an example, all matched feature point groups between the map A and the map B may be obtained through the above feature point matching process. Positions corresponding to these feature point groups are common positions belonging to both the map A and the map B. Thus, in the example of the disclosure, region fitting may be performed according to all matched feature points between the map A and the map B, so the common region between the map A and the map B is obtained, for example, the common region D1 in Figure 3.

It may be seen from the above that in the example of the disclosure, by dividing the large environment operation range, map constructing pressure of the robot at a time is relieved, the requirement for capability of a low-computing-power robot is met. Furthermore, a map range of map constructing at a time is small, so the risk of location drift is low, and map accuracy is higher. Besides, association of the operation maps is autonomously completed by the robot without manually establishing the map connection relationship, map association efficiency and accuracy are improved, and a data foundation is built for the follow-up robot operations.

### 2) Operation stage

As shown in Figure 5, in some examples, the robot control method according to the example of the disclosure includes steps S510, S520, S530 and S540.

Step S510 includes determining, according to target position information of a current operation of the robot, a target operation map including the target position information from a plurality of pre-constructed operation maps.

In the example of the disclosure, the target position information refers to position information corresponding to an operation destination of the robot. It can be understood that the operation destination of the robot may be within a range of a current operation map or not.

For example, in the example shown in Figure 3, it is assumed that a current position of the robot is a point P, the point P is located within a range of the map A, the operation destination of the robot is a point Q, and the point Q is not located within the range of the map A but is located within a range of the map C.

In the example of the disclosure, the target position information may be information directly inputted by a worker. For example, the worker may send the target position information of the operation destination to the robot through a mobile terminal, a server or another device. The target position information may also be information autonomously determined by the robot. For example, the robot determines, according to an operation content, the target position information of the operation destination where the robot needs to go at present, which is not described in detail by the disclosure.

In some examples, the target position information refers to a coordinate of the operation destination in the world coordinate system.

In the example of the disclosure, it may be firstly determined, according to the target position information of the operation destination and map information of the current operation map of the robot, whether the target position information is located within the map information of the current operation map.

If yes, it indicates that the current operation map of the robot includes the operation destination, so that the robot can complete navigation and movement directly according to the target position information without needing to perform map switching.

Otherwise, it indicates that the current operation map of the robot does not include the operation destination, in other words, the operation destination is possibly located within a range of another operation map. Thus, it needs to determine, according to the target position information, which of operation maps is the operation destination located on, and the operation map including the operation destination is the target operation map described in the disclosure.

It can be seen with reference to the above description that a position coordinate of each point on each map may be obtained based on the operation maps pre-constructed in the preparation stage. Thus, in the example of the disclosure, all the operation maps may be traversed in sequence according to the target position information until the operation map including the target position information, namely, the target operation map, is determined.

In some examples, the current operation map may be used as a starting point, each operation map is traversed in sequence according to the map connection relationship until the operation map including the target position information is found and determined as the target operation map. In this way, redundant computation may be avoided in a case that the operation destination is located within the common region.

For example, in the example shown in Figure 3, it is assumed that the current position of the robot is the point P, the operation destination is a point S2, and the point S2 is located in the common region D2 between the map B and the map C. During determining the target operation map, firstly, it is determined that the current map A is not the target operation map according to the target position information, then the map B is determined, according to the connection relationship shown in Figure 4, to be associated with the current map A, then it is determined that the point S2 is located on the map B according to map information of the map B and the target position information, then the map B is determined as the target operation map, and a position relationship between the map C and the point S2 is no longer calculated, and thus redundant computation is reduced.

Step S520 includes determining, based on the pre-established map connection relationship, a transfer position that the robot moves from the current position to the target operation map.

It can be understood that the map information based on which the robot operates in the current operation map is the map information of the current operation map. If a cross-region operation is expected to be implemented, the current operation map needs to be switched to the operation map of another map region when the robot enters another map region.

A position where the robot switches the maps is within the common region between the two associated maps. This is because the common region has the common feature of the two operation maps, so that the robot can still accurately localize its position in the map after switching the maps, and it is guaranteed that navigation is normally performed.

In order to enable the robot to move to the operation destination, firstly, it needs to be guaranteed that the robot moves to a map range of the target operation map, and then the robot can easily move to the operation destination according to the map information of the target operation map.

Thus, in the examples of the disclosure, after the target operation map is determined, it may firstly determine one or more transfer positions that the robot moves from the current position to the target operation map. The transfer position refers to a position in the common region between the two adjacent operation maps.

For example, in the example shown in Figure 3, it is assumed that the current position of the robot is the point P, the operation destination is the point Q, and the operation destination point Q is located on the map C.

In order to enable the robot to move from the point P to the point Q, it needs to firstly determine a transfer position that the robot moves from the point P to the map C. For example, the transfer position includes a point S1 and a point S2. The point S1 is located in the common region D1 between the map A and the map B, so that the robot may switch, at the point S1, the operation maps from the map A to the map B. The point S2 is located in the common region D2 between the map B and the map C, so that the robot may switch, at the point S2, the operation maps from the map B to the map C. In this way, the robot is enabled to accurately move into the range of the target operation map (the map C).

In the examples of the disclosure, it needs to determine, according to the above established map connection relationship, whether the robot can move from the current position to the target operation map.

In a case that a direct or indirect association relationship exists between the current operation map and the target operation map in the map connection relationship, it indicates that the robot may move from the current position to the range of the target operation map. For example, in the map connection relationship in an example shown in Figure 4, a direct association relationship exists between the map A and the map B as well as between the map B and the map C, and an indirect association relationship exists between the map A and the map C.

In a case that any direct or indirect association relationship does not exist between the current operation map and the target operation map in the map connection relationship, it indicates that the robot cannot move from the current position to the range of the target operation map, so the robot can directly report an error to prompt the worker, which is not discussed in this disclosure.

In an example of the disclosure, in a case that it is determined, according to the map connection relationship, that the robot can move from the current position to the target operation map, each transfer position on a path that the robot moves from the current position to the target operation map may be determined in sequence according to the map connection relationship, and the transfer position needs to be located in the common region.

lt can be understood that the common region is usually a large range and may internally include many positions. In some examples, the robot may select a position with the shortest path from the current position and in the common region as the transfer position. In some other examples, the robot may select a position with a feature point having the highest confidence coefficient in the common region as the transfer position. A process of selecting the transfer position is described below in the disclosure and is not to be described in detail here.

For example, in an example, as shown in Figure 3, a total of two transfer positions are determined on the path that the robot moves from the current position point P to the target operation map (the map C) and are respectively the transfer position point S1 and the transfer position point S2.

Step S530 includes controlling the robot to move to the transfer position and switching maps, until the robot moves to the target operation map.

In the example of the disclosure, after determining the transfer positions on the movement path of the robot, the robot may move to each transfer position in sequence to complete map switching, until the robot moves into the range of the target operation map.

Still taking the above example shown in Figure 3 as an example, a total of two transfer positions are determined on the path that the robot moves from the current position point P to the target operation map (the map C) and are respectively the transfer position point S1 and the transfer position point S2.

The robot may first move to the transfer position S1 autonomously according to the map information of the current operation map "map A" and coordinate information of the transfer position S1. At the transfer position S1, the operation maps may be switched from the "map A" to the "map B", as the transfer position S1 belongs to both the map A and the map B. After switching to the map B, the robot still can accurately determine its position to complete navigation and movement within the range of the map B.

Then, the robot may move to the transfer position S2 autonomously according to map information of the switched "map B" and coordinate information of the transfer position S2. At the transfer position S2, the operation maps may be switched from the "map B" to the "map C", as the transfer position S2 belongs to both the map B and the map C. After switching to the map C, the robot still can accurately determine its position to complete navigation and movement within the range of the map C.

In this example, the map C is the target operation map, so that after the robot moves to the transfer position S2 and the operation map is switched to the "map C", the robot can determine entering the target operation map.

Step S540 includes controlling, according to the map information of the target operation map and the target position information, the robot to move to the operation destination.

In the examples of the disclosure, as the robot has entered in the range of the target operation map and the target position information of the operation destination is also located in the range of the target operation map, the robot directly moves to the operation destination according to the map information of the target operation map and the target position information of the operation destination.

In some examples, the target position information refers to the coordinate information of the operation destination in the world coordinate system, so that firstly, the target position information may be transformed into the map coordinate system, and then the robot is controlled to plan a path and complete navigation and movement according to the transformed coordinate information and the map information of the target operation map.

lt can be understood that according to the robot control method of the disclosure, by dividing the large environment operation range, map constructing pressure of the robot at a time is relieved. In addition, the robot operates based on the small maps during operation, a data volume is small, thus the requirement for an internal storage and computing power of the robot is lower, robot cost is reduced. Furthermore, the risk of location drift is lower during navigation and localization based on the small maps, and thus the navigation accuracy and stability of the robot are higher.

Besides, the cross-map continuous operation of the robot may be implemented through map switching. Compared with a conventional partition operation mode, the number of needed robots is smaller. One robot can complete the continuous operation of the entire region theoretically, and robot deployment cost is reduced. In addition, when the robot in a certain region has a failure, the robot in another region can directly cross the region to replace the failure robot to continue operating, so operation stability is higher.

It can be seen from the above description that in the examples of the disclosure, by dividing the large environment operation range, the robot operates based on the small maps, so map constructing and operation pressure of the robot at a time is relieved, single-machine cost is reduced, and navigation accuracy and stability of the robot are improved. Furthermore, the robot may implement the cross-map continuous operation, continuous operation in the entire region can be implemented merely by single robot, robot deployment cost is reduced, and operation stability is improved.

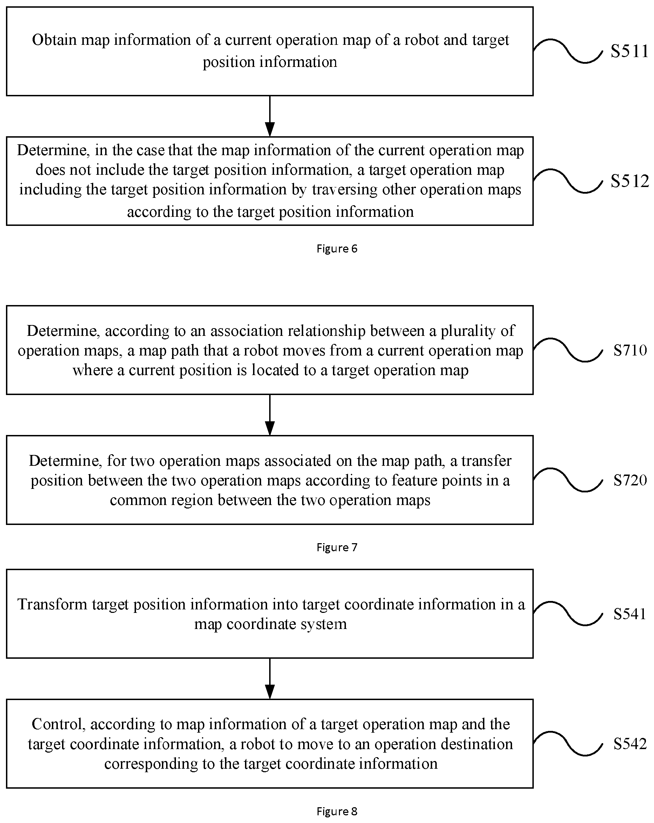

As shown in Figure 6, in some examples, in the robot control method in the example of the disclosure, a process of determining the target operation map according to the target position information of the robot includes steps S511 and S512.

Step S511 includes obtaining the map information of the current operation map of the robot and the target position information.

Step S512 includes determining, in a case that the map information of the current operation map does not include the target position information, the target operation map including the target position information by traversing, according to the target position information, other operation maps.

In the examples of the disclosure, it can be seen with reference to the above description that the target position information refers to the position information of the operation destination of the robot, and the map information of the current operation map refers to the map information of a position where the robot is located at present.

Accordingly, firstly, it may determine, according to the map information of the current operation map and the target position information, whether the operation destination of the robot is located within the range of the current operation map. For example, it may determine, according to a coordinate of the target position information, whether the map information of the current operation map includes the target position information.

If yes, it indicates that the operation destination is located within the range of the current operation map, so that the robot can complete navigation and movement directly according to the target position information without needing to perform map switching, which is not discussed in the disclosure.

Otherwise, it indicates that the operation destination is not located within the range of the current operation map and may be located within the range of another operation map, so that the other operation maps except the current operation map may be traversed according to the target position information, and it is determined, according to the target position information, which of operation maps the operation destination is located on, and the operation map including the operation destination is the target operation map described in the disclosure.

As shown in Figure 7, in some examples, in the robot control method in the example of the disclosure, a process of determining the transfer position for the movement of the robot includes steps S710 and S720.

Step S710 includes determining, according to the association relationship between the plurality of operation maps, the map path that the robot moves from the current operation map where the current position is located to the target operation map.

Step S720 includes determining, for the two operation maps associated on the map path, the transfer position between the two operation maps according to feature points in a common region between the two operation maps.

lt can be seen with reference to the above description that the map connection relationship pre-constructed in the preparation stage includes the association relationship between the plurality of operation maps. The association relationship may be represented by, for example, a topological graph shown in Figure 4.

With reference to the examples shown in Figure 3 and Figure 4, it is assumed that the current position of the robot is the point P, the current operation map is the map A, the operation destination is the point Q, and the operation destination point Q is located on the map C, so the target operation map is the map C. Namely, the robot needs to move from the map A to the map C.

In the examples of the disclosure, firstly, the map path from the current operation map (the map A) to the target operation map (the map C) may be determined according to, for example, the map connection relationship shown in Figure 4, namely, the map path of "map A-map B-map C".

After the map path is determined, the transfer positions between the two associated operation maps on the map path are determined in sequence.

For example, for the associated map A and map B, the common region D1 exists between the map A and the map B, one transfer position needs to be determined from the common region D1 for implementing switching from the map A to the map B.

In some examples, a position corresponding to a feature point with the highest confidence coefficient may be determined as the transfer position according to a confidence coefficient of each feature point included in the common region D1.

lt can be seen with reference to the method in the preparation stage that each operation map includes many feature points, the feature points included in the common region D1 are matched feature points between the map A and the map B. The confidence coefficient of a certain feature point may represent a probability that this feature point is the same point on the map A and the map B. The higher the confidence coefficient is, the higher the probability that this feature point is the same point on the map A and the map B is.

For example, in some examples, a distance between the feature point on the map A and the feature point on the map B may be calculated according to feature information of the feature point on the map A and feature information of the feature point on the map B, and the distance may represent the confidence coefficient of the feature point. Thus, the position corresponding to the feature point with the highest confidence coefficient is determined as the transfer position according to the confidence coefficient of each feature point in the common region D1. For example, in the example shown in Figure 3, the confidence coefficient of the feature point S1 in the common region D1 is the highest, so the point S1 may be determined as the transfer position between the map A and the map B.

For the map B and the map C associated on the map path, a process of determining the transfer position point S2 is the same as the above description. Those skilled in the art may perform with reference to the above description, which is not described in detail in the disclosure.

After the transfer position is determined, the robot may be controlled to move to each transfer position in sequence along the map path, and at the transfer position, the current operation map is switched to the associated operation map, until the robot moves to the target operation map.

For example, in the example shown in Figure 3, according to the map path of "map A-map B-map C", the robot may first move to the transfer position S1 and may then switch, at the transfer position S1, the operation maps from "map A" to "map B". Then, the robot may move to the transfer position S2 according to the map information of the switched "map B" and may then switch, at the transfer position S2, the operation maps from "map B" to "map C" to reach the target operation map.

As shown in Figure 8, in some examples, in the robot control method in the example of the disclosure, a process of controlling the robot to move to the operation destination includes steps S541 and S542.

Step S541 includes transforming the target position information into target coordinate information in the map coordinate system.

Step S542 includes controlling, according to the map information of the target operation map and the target coordinate information, the robot to move to the operation destination corresponding to the target coordinate information.

In the example of the disclosure, the target position information refers to the coordinate information of the operation destination in the world coordinate system, so that firstly, the target position information may be transformed into the map coordinate system to obtain the target coordinate information of the operation destination in the map coordinate system.

Through the above process of the method, the robot has entered the range of the target operation map and switched the current operation map to the target operation map, so it is needed merely that a movement path is planned according to the target coordinate information and the map information of the target operation map and then the robot is controlled to move to the operation destination according to the planned path.

lt can be seen from the above description that in the example of the disclosure, by dividing the large environment operation range, the robot operates based on the small maps, so map constructing and operation pressure of the robot at a time is relieved, single-machine cost is reduced, and navigation accuracy and stability of the robot are improved. Furthermore, the robot may implement the cross-map continuous operation, continuous operation in the entire region can be implemented merely by single robot, thus robot deployment cost is reduced, and operation stability is improved.

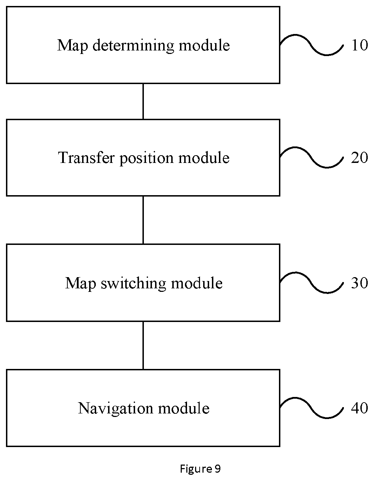

In some examples, the disclosure provides a robot control apparatus. The robot control apparatus may be applied to a robot in any above form. As shown in Figure 9, the robot control apparatus includes a map determining module 10, a transfer position module 20, a map switching module 30, and a navigation module 40.

The map determining module 10 is configured to determine, according to target position information of a current operation of the robot, a target operation map including the target position information from a plurality of pre-constructed operation maps. The target position information refers to position information corresponding to an operation destination of the robot.

The transfer position module 20 is configured to determine, based on a pre-established map connection relationship, a transfer position that the robot moves from a current position to the target operation map. The transfer position refers to a position in a common region of two adjacent operation maps.

The map switching module 30 is configured to control the robot to move to each transfer position and switch maps, until the robot moves to the target operation map.

The navigation module 40 is configured to control the robot to move to the operation destination according to map information of the target operation map and the target position information.

lt can be seen from the above description that in the example of the disclosure, by dividing a large environment operation range, the robot operates based on small maps, so map constructing and operation pressure of the robot at a time is relieved, single-machine cost is reduced, and navigation accuracy and stability of the robot are improved. Furthermore, the robot may implement the cross-map continuous operation, continuous operation in the entire region can be implemented merely by single robot, thus robot deployment cost is reduced, and operation stability is improved.

In some examples, the map determining module 10 is configured to:
obtain map information of a current operation map of the robot and the target position information; and
determine, in a case that the map information of the current operation map does not include the target position information, the target operation map including the target position information by traversing, according to the target position information, other operation maps.

In some examples, the map connection relationship includes an association relationship between the plurality of operation maps, and a common region between associated operation maps. The transfer position module 20 is configured to:
determine, according to the association relationship between the plurality of operation maps, a map path that the robot moves from a current operation map where the current position is located to the target operation map; and
determine, for two operation maps associated on the map path, a transfer position between the two operation maps according to feature points in a common region between the two operation maps.

In some examples, the transfer position module 20 is configured to:
obtain confidence coefficients of feature points included in the common region, and determine a position corresponding to a feature point with the highest confidence coefficient as the transfer position; the confidence coefficient representing a probability that the feature point is the same point on the two operation maps.

In some examples, the map switching module 30 is configured to:
move to each transfer position in sequence based on the map path, and switch, at each transfer position, the current operation map to an operation map associated with the current operation map, until the robot moves to the target operation map.

In some examples, the navigation module 40 is configured to:
transform the target position information into target coordinate information in a map coordinate system; and
control, according to the map information of the target operation map and the target coordinate information, the robot to move to the operation destination corresponding to the target coordinate information.

In some examples, the transfer position module 20 is configured to:
construct and obtain a plurality of operation maps, where each operation map includes map coordinate information and a plurality of feature point information on the operation map;
perform, for any two operation maps, feature matching according to the feature point information included in each of the two operation maps, and determine, in a case that at least one group of feature points are matched, the two operation maps as two associated operation maps; and
determine, for the two associated operation maps, the common region between the two operation maps according to the matched feature points.

In some examples, an example of the disclosure provides a robot, including:
one or more processors; and
a memory, storing computer instructions, the computer instructions being used for causing the one or more processors to perform the method described in any above example.

In some examples, an example of the disclosure provides a non-transitory storage medium, storing computer instructions, the computer instructions being used for causing a computer to perform the method described in any above example.

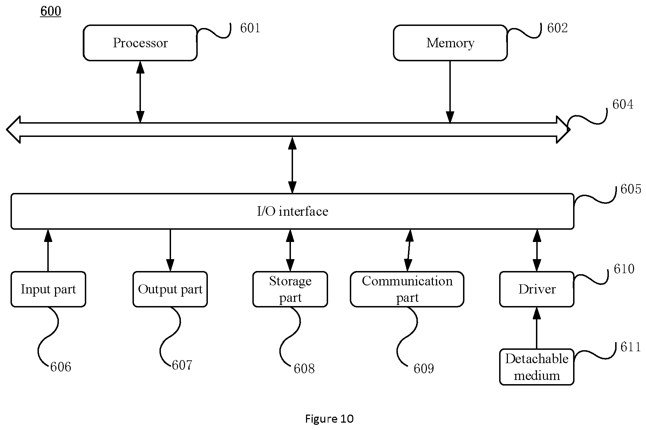

Figure 10 shows a schematic structural diagram of a robot 600 suitable for implementing the methods of the disclosure. Corresponding functions of the above one or more processors and non-transitory storage medium may be implemented by the robot shown in Figure 10.

As shown in Figure 10, the robot 600 includes a processor 601 which may perform various appropriate actions and processing according to a program stored in a memory 602 or a program loaded from a storage part 608 to the memory 602. The memory 602 further stores various programs and data needed for operation of the robot 600. The processor 601 is connected with the memory 602 through a bus 604. An input/output (I/O) interface 605 is also connected to the bus 604.

The following components are connected to the I/O interface 605: an input part 606 including such as a keyboard and a mouse; an output part 607 including such as a cathode ray tube (CRT), a liquid crystal display (LCD) and a speaker; the storage part 608 including such as a hard disk; and a communication part 609 including such as an LAN card, a modem and other network interface cards. The communication part 609 performs communication processing via a network such as Internet. A driver 610 is also connected to the I/O interface 605 as required. A detachable medium 611, such as a magnetic disk, an optical disk, a magnet optical disk and a semiconductor memory, is mounted on the driver 610 as required, so that a computer program read from the medium is set in the storage part 608 as required.

According to the example of the disclosure, the process of the method described above may be implemented as a computer software program. For example, an example of the disclosure includes a computer program product. The computer program product includes a computer program tangibly included on a machine readable medium. The computer program includes a program code for performing the above method. In this type of example, the computer program may be downloaded and set from a network through the communication part 609, and/or set from the detachable medium 611.

The flowcharts and block diagrams in the accompanying drawings illustrate the architectures, functions, and operations of possible examples of the systems, methods, and computer program products according to various examples of the disclosure. In this regard, each block in the flowcharts or block diagrams may represent a module, a program segment, or part of a code. The module, the program segment, or the part of the code includes one or a plurality of executable instructions for implementing specified logical functions. It is to be noted that in some alternative examples, functions marked in the blocks may also occur in an order different from that marked in the accompanying drawings. For example, two successive blocks may actually be executed in parallel substantially, and sometimes they may also be executed in a reverse order, which depends on involved functions. It is to be further noted that each block in the block diagrams and/or flowcharts as well as a combination of blocks in the block diagrams and/or flowcharts may be implemented by using a special hardware-based system that executes specified functions or operations, or implemented by using a combination of special hardware and computer instructions.

## Claims

1. A robot control method, performed by a robot and comprising:
determining (S510), according to target position information of a current operation of the robot, a target operation map comprising the target position information from a plurality of pre-constructed operation maps, the target position information being position information corresponding to an operation destination of the robot;
determining (S520), based on a pre-established map connection relationship, a transfer position that the robot moves from a current position to the target operation map, the transfer position being a position in a common region between two adjacent operation maps, wherein the pre-established map connection relationship comprises an association relationship between the plurality of pre-constructed operation maps and a common region between associated operation maps;
controlling (S530) the robot to move to the transfer position and switching (S530) maps, until the robot moves to the target operation map; and
controlling (S540), according to map information of the target operation map and the target position information, the robot to move to the operation destination;
the method being **characterised in that** the
determining (S520), based on the pre-established map connection relationship, the transfer position that the robot moves from the current position to the target operation map comprises:
determining (S710), according to the association relationship between the plurality of pre-constructed operation maps, a map path that the robot moves from a current operation map where the current position is located to the target operation map; and
for two operation maps associated on the map path, obtaining confidence coefficients of feature points comprised in the common region of the two operation maps associated, and determining a position corresponding to a feature point with the highest confidence coefficient as the transfer position; the confidence coefficient representing a probability that the feature point is the same point on the two operation maps.

2. The robot control method according to claim 1, wherein determining (S510), according to the target position information of the current operation of the robot, the target operation map comprising the target position information from the plurality of pre-constructed operation maps comprises:
obtaining (S511) map information of the current operation map of the robot and the target position information; and
determining (S512), in a case that the map information of the current operation map does not comprise the target position information, the target operation map comprising the target position information by traversing, according to the target position information, other operation maps.

3. The robot control method according to claim 1, wherein controlling (S530) the robot to move to the transfer position and switching (S530) the maps, until the robot moves to the target operation map comprises:
moving to each transfer position in sequence based on the map path, and switching, at each transfer position, the current operation map to an operation map associated with the current operation map, until the robot moves to the target operation map.

4. The robot control method according to any one of claims 1 to 3, wherein controlling (S540), according to the map information of the target operation map and the target position information, the robot to move to the operation destination comprises:
transforming (S541) the target position information into target coordinate information in a map coordinate system; and
controlling (S542), according to the map information of the target operation map and the target coordinate information, the robot to move to the operation destination corresponding to the target coordinate information.

5. The robot control method according to any one of claims 1 to 4, wherein a process of pre-establishing the map connection relationship comprises:
constructing (S210) and obtaining (S210) a plurality of operation maps, wherein each operation map comprises map coordinate information and a plurality of feature point information on the operation map;
performing (S220), for any two operation maps, feature matching according to feature point information comprised in each of the two operation maps, and determining (S220), in a case that at least one group of feature points are matched, the two operation maps as two associated operation maps; and
determining (S230), for the two associated operation maps, the common region between the two operation maps according to the matched feature points.

6. A robot (600), comprising:
one or more processors (601); and
a memory (602), storing computer instructions, the computer instructions being used for causing the one or more processors (601) to collectively:
determine, according to target position information of a current operation of the robot, a target operation map comprising the target position information from a plurality of pre-constructed operation maps, the target position information being position information corresponding to an operation destination of the robot;
determine, based on a pre-established map connection relationship, a transfer position that the robot moves from a current position to the target operation map, the transfer position being a position in a common region between two adjacent operation maps, wherein the pre-established map connection relationship comprises an association relationship between the plurality of pre-constructed operation maps and a common region between associated operation maps;
control the robot to move to the transfer position and switch maps, until the robot moves to the target operation map; and
control, according to map information of the target operation map and the target position information, the robot to move to the operation destination;
being **characterised in that** the determining, based on the pre-established map connection relationship, the transfer position that the robot moves from the current position to the target operation map comprises:
determining, according to the association relationship between the plurality of pre-constructed operation maps, a map path that the robot moves from a current operation map where the current position is located to the target operation map; and
for two operation maps associated on the map path, obtaining confidence coefficients of feature points comprised in the common region of the two operation maps associated, and determining a position corresponding to a feature point with the highest confidence coefficient as the transfer position; the confidence coefficient representing a probability that the feature point is the same point on the two operation maps.

7. The robot (600) according to claim 6, wherein a computer instruction that causes the one or more processors (601) to collectively determine, according to the target position information of the current operation of the robot (600), the target operation map comprising the target position information from the plurality of pre-constructed operation maps further causes the one or more processors (601) to collectively:
obtain map information of the current operation map of the robot (600) and the target position information; and
determine, in a case that the map information of the current operation map does not comprise the target position information, the target operation map comprising the target position information by traversing, according to the target position information, other operation maps.

8. The robot (600) according to claim 6, wherein the computer instruction that causes the one or more processors (601) to collectively control the robot (600) to move to the transfer position and switch the maps, until the robot (600) moves to the target operation map further causes the one or more processors (601) to collectively:
move to each transfer position in sequence based on the map path, and switch, at each transfer position, the current operation map to an operation map associated with the current operation map, until the robot (600) moves to the target operation map.

9. The robot (600) according to any one of claims 6 to 8, wherein a computer instruction that causes the one or more processors (601) to collectively control the robot (600) to move to the operation destination according to the map information of the target operation map and the target position information further causes the one or more processors (601) to collectively:
transform the target position information into target coordinate information in a map coordinate system; and
control, according to the map information of the target operation map and the target coordinate information, the robot (600) to move to the operation destination corresponding to the target coordinate information.

10. The robot (600) according to any one of claims 6 to 9, wherein the one or more processors (601) are further configured to pre-establish the map connection relationship by:
constructing and obtaining a plurality of operation maps, wherein each operation map comprises map coordinate information and a plurality of feature point information on the operation map;
performing, for any two operation maps, feature matching according to feature point information comprised in each of the two operation maps, and determining, in a case that at least one group of feature points are matched, the two operation maps as two associated operation maps; and
determining, for the two associated operation maps, the common region between the two operation maps according to the matched feature points.

11. A non-transitory storage medium, storing computer instructions, the computer instructions being used for causing a computer to perform the robot control method according to any one of claims 1 to 5.

## Patentansprüche

1. Robotersteuerungsverfahren, das von einem Roboter durchgeführt wird, umfassend:
Bestimmen (S510) einer Zieloperationskarte, die Zielpositionsinformationen aus einer Vielzahl von vorab erstellten Operationskarten umfasst, gemäß den Zielpositionsinformationen eines aktuellen Betriebs des Roboters, wobei die Zielpositionsinformationen Positionsinformationen sind, die einem Operationsziel des Roboters entsprechen;
Bestimmen (S520) einer Übergabeposition, zu der sich der Roboter von einer aktuellen Position zur Zieloperationskarte bewegt, basierend auf einer vorab festgelegten Kartenverbindungsbeziehung, wobei die Übergabeposition eine Position in einem gemeinsamen Bereich zwischen zwei benachbarten Operationskarten ist, und wobei die vorab festgelegte Kartenverbindungsbeziehung eine Zuordnungsbeziehung zwischen der Vielzahl von vorab erstellten Operationskarten und einem gemeinsamen Bereich zwischen zugeordneten Operationskarten umfasst;
Steuern (S530) des Roboters, um sich zur Übergabeposition zu bewegen und Karten zu wechseln, bis der Roboter zur Zieloperationskarte gelangt; und
Steuern (S540) des Roboters, um sich gemäß den Karteninformationen der Zieloperationskarte und den Zielpositionsinformationen zum Operationsziel zu bewegen;
**dadurch gekennzeichnet, dass** das Bestimmen (S520) der Übergabeposition, zu der sich der Roboter von der aktuellen Position zur Zieloperationskarte bewegt, basierend auf der vorab festgelegten Kartenverbindungsbeziehung Folgendes umfasst:
Bestimmen (S710) eines Kartenpfads, entlang dessen sich der Roboter von einer aktuellen Operationskarte, in der sich die aktuelle Position befindet, zur Zieloperationskarte bewegt, gemäß der Zuordnungsbeziehung zwischen der Vielzahl von vorab erstellten Operationskarten; und
für zwei auf dem Kartenpfad zugeordnete Operationskarten: Erhalten von Konfidenzkoeffizienten von Merkmalspunkten, die im gemeinsamen Bereich der beiden zugeordneten Operationskarten enthalten sind, und Bestimmen einer Position, die einem Merkmalspunkt mit dem höchsten Konfidenzkoeffizienten entspricht, als Übergabeposition; wobei der Konfidenzkoeffizient eine Wahrscheinlichkeit darstellt, dass der Merkmalspunkt derselbe Punkt auf den beiden Operationskarten ist.

2. Robotersteuerungsverfahren nach Anspruch 1, wobei das Bestimmen (S510) der Zieloperationskarte, die die Zielpositionsinformationen aus der Vielzahl von vorab erstellten Operationskarten umfasst, gemäß den Zielpositionsinformationen des aktuellen Betriebs des Roboters Folgendes umfasst:
Erhalten (S511) von Karteninformationen der aktuellen Operationskarte des Roboters und der Zielpositionsinformationen; und
Bestimmen (S512) der Zieloperationskarte, die die Zielpositionsinformationen umfasst, indem gemäß den Zielpositionsinformationen andere Operationskarten durchsucht werden, falls die Karteninformationen der aktuellen Operationskarte die Zielpositionsinformationen nicht umfassen.

3. Robotersteuerungsverfahren nach Anspruch 1, wobei das Steuern (S530) des Roboters, um sich zur Übergabeposition zu bewegen und die Karten zu wechseln, bis der Roboter zur Zieloperationskarte gelangt, Folgendes umfasst:
Bewegen zu jeder Übergabeposition in der Reihenfolge basierend auf dem Kartenpfad und Wechseln der aktuellen Operationskarte zu einer der aktuellen Operationskarte zugeordneten Operationskarte an jeder Übergabeposition, bis der Roboter zur Zieloperationskarte gelangt.

4. Robotersteuerungsverfahren nach einem der Ansprüche 1 bis 3, wobei das Steuern (S540) des Roboters, um sich gemäß den Karteninformationen der Zieloperationskarte und den Zielpositionsinformationen zum Operationsziel zu bewegen, Folgendes umfasst:
Umwandeln (S541) der Zielpositionsinformationen in Zielkoordinateninformationen in einem Kartenkoordinatensystem; und
Steuern (S542) des Roboters, um sich gemäß den Karteninformationen der Zieloperationskarte und den Zielkoordinateninformationen zum Operationsziel zu bewegen, das den Zielkoordinateninformationen entspricht.

5. Robotersteuerungsverfahren nach einem der Ansprüche 1 bis 4, wobei ein Prozess des vorab Festlegens der Kartenverbindungsbeziehung Folgendes umfasst:
Erstellen (S210) und Erhalten (S210) einer Vielzahl von Operationskarten, wobei jede Operationskarte Kartenkoordinateninformationen und eine Vielzahl von Merkmalspunktinformationen auf der Operationskarte umfasst;
Durchführen (S220) von Merkmalsabgleich für beliebige zwei Operationskarten gemäß den Merkmalspunktinformationen, die in jeder der beiden Operationskarten enthalten sind, und Bestimmen (S220), falls mindestens eine Gruppe von Merkmalspunkten übereinstimmt, der beiden Operationskarten als zwei zugeordnete Operationskarten; und
Bestimmen (S230) des gemeinsamen Bereichs zwischen den beiden zugeordneten Operationskarten gemäß den übereinstimmenden Merkmalspunkten.

6. Roboter (600), umfassend:
einen oder mehrere Prozessoren (601); und
einen Speicher (602), der Computeranweisungen speichert, wobei die Computeranweisungen dazu dienen, den einen oder die mehreren Prozessoren (601) gemeinsam zu veranlassen:
eine Zieloperationskarte, die Zielpositionsinformationen umfasst, aus einer Vielzahl von vorab erstellten Operationskarten gemäß den Zielpositionsinformationen eines aktuellen Betriebs des Roboters zu bestimmen, wobei die Zielpositionsinformationen Positionsinformationen sind, die einem Operationsziel des Roboters entsprechen;
eine Übergabeposition zu bestimmen, zu der sich der Roboter von einer aktuellen Position zur Zieloperationskarte bewegt, basierend auf einer vorab festgelegten Kartenverbindungsbeziehung, wobei die Übergabeposition eine Position in einem gemeinsamen Bereich zwischen zwei benachbarten Operationskarten ist, und wobei die vorab festgelegte Kartenverbindungsbeziehung eine Zuordnungsbeziehung zwischen der Vielzahl von vorab erstellten Operationskarten und einem gemeinsamen Bereich zwischen zugeordneten Operationskarten umfasst;
den Roboter zu steuern, um sich zur Übergabeposition zu bewegen und Karten zu wechseln, bis der Roboter zur Zieloperationskarte gelangt; und
den Roboter gemäß den Karteninformationen der Zieloperationskarte und den Zielpositionsinformationen zu steuern, um sich zum Operationsziel zu bewegen;
**dadurch gekennzeichnet, dass** das Bestimmen der Übergabeposition, zu der sich der Roboter von der aktuellen Position zur Zieloperationskarte bewegt, basierend auf der vorab festgelegten Kartenverbindungsbeziehung Folgendes umfasst:
Bestimmen eines Kartenpfads, entlang dessen sich der Roboter von einer aktuellen Operationskarte, in der sich die aktuelle Position befindet, zur Zieloperationskarte bewegt, gemäß der Zuordnungsbeziehung zwischen der Vielzahl von vorab erstellten Operationskarten; und
für zwei auf dem Kartenpfad zugeordnete Operationskarten: Erhalten von Konfidenzkoeffizienten von Merkmalspunkten, die im gemeinsamen Bereich der beiden zugeordneten Operationskarten enthalten sind, und Bestimmen einer Position, die einem Merkmalspunkt mit dem höchsten Konfidenzkoeffizienten entspricht, als Übergabeposition; wobei der Konfidenzkoeffizient eine Wahrscheinlichkeit darstellt, dass der Merkmalspunkt derselbe Punkt auf den beiden Operationskarten ist.

7. Roboter (600) nach Anspruch 6, wobei eine Computeranweisung, die den einen oder die mehreren Prozessoren (601) gemeinsam veranlasst, die Zieloperationskarte, die die Zielpositionsinformationen aus der Vielzahl von vorab erstellten Operationskarten umfasst, gemäß den Zielpositionsinformationen des aktuellen Betriebs des Roboters (600) zu bestimmen, den einen oder die mehreren Prozessoren (601) gemeinsam veranlasst:
Karteninformationen der aktuellen Operationskarte des Roboters (600) und die Zielpositionsinformationen zu erhalten; und
die Zieloperationskarte zu bestimmen, die die Zielpositionsinformationen umfasst, indem gemäß den Zielpositionsinformationen andere Operationskarten durchsucht werden, falls die Karteninformationen der aktuellen Operationskarte die Zielpositionsinformationen nicht umfassen.

8. Roboter (600) nach Anspruch 6, wobei die Computeranweisung, die den einen oder die mehreren Prozessoren (601) gemeinsam veranlasst, den Roboter (600) zu steuern, um sich zur Übergabeposition zu bewegen und die Karten zu wechseln, bis der Roboter (600) zur Zieloperationskarte gelangt, den einen oder die mehreren Prozessoren (601) gemeinsam veranlasst:
sich zu jeder Übergabeposition in der Reihenfolge basierend auf dem Kartenpfad zu bewegen und an jeder Übergabeposition die aktuelle Operationskarte zu einer der aktuellen Operationskarte zugeordneten Operationskarte zu wechseln, bis der Roboter (600) zur Zieloperationskarte gelangt.

9. Roboter (600) nach einem der Ansprüche 6 bis 8, wobei eine Computeranweisung, die den einen oder die mehreren Prozessoren (601) gemeinsam veranlasst, den Roboter (600) gemäß den Karteninformationen der Zieloperationskarte und den Zielpositionsinformationen zum Operationsziel zu steuern, den einen oder die mehreren Prozessoren (601) gemeinsam veranlasst:
die Zielpositionsinformationen in Zielkoordinateninformationen in einem Kartenkoordinatensystem umzuwandeln; und
den Roboter (600) gemäß den Karteninformationen der Zieloperationskarte und den Zielkoordinateninformationen zum Operationsziel zu steuern, das den Zielkoordinateninformationen entspricht.

10. Roboter (600) nach einem der Ansprüche 6 bis 9, wobei der eine oder die mehreren Prozessoren (601) ferner konfiguriert sind, um die Kartenverbindungsbeziehung vorab festzulegen durch:
Erstellen und Erhalten einer Vielzahl von Operationskarten, wobei jede Operationskarte Kartenkoordinateninformationen und eine Vielzahl von Merkmalspunktinformationen auf der Operationskarte umfasst;
Durchführen von Merkmalsabgleich für beliebige zwei Operationskarten gemäß den Merkmalspunktinformationen, die in jeder der beiden Operationskarten enthalten sind, und Bestimmen, falls mindestens eine Gruppe von Merkmalspunkten übereinstimmt, der beiden Operationskarten als zwei zugeordnete Operationskarten; und
Bestimmen des gemeinsamen Bereichs zwischen den beiden zugeordneten Operationskarten gemäß den übereinstimmenden Merkmalspunkten.

11. Nichtflüchtiges Speichermedium, das Computeranweisungen speichert, wobei die Computeranweisungen dazu dienen, einen Computer zu veranlassen, das Robotersteuerungsverfahren nach einem der Ansprüche 1 bis 5 durchzuführen.

## Revendications

1. Procédé de commande de robot, exécuté par un robot et comprenant :
la détermination (S510), en fonction d'informations de position cible d'une opération actuelle du robot, d'une carte d'opération cible comprenant les informations de position cible parmi une pluralité de cartes d'opération pré-construites, les informations de position cible étant des informations de position correspondant à une destination d'opération du robot ;
la détermination (S520), sur la base d'une relation de connexion de carte préétablie, d'une position de transfert vers laquelle le robot se déplace depuis une position actuelle vers la carte d'opération cible, la position de transfert étant une position dans une région commune entre deux cartes d'opération adjacentes, la relation de connexion de carte préétablie comprenant une relation d'association entre la pluralité de cartes d'opération pré-construites et une région commune entre des cartes d'opération associées ;
la commande (S530) du robot pour qu'il se déplace vers la position de transfert et le changement (S530) de cartes, jusqu'à ce que le robot se déplace vers la carte d'opération cible ; et
la commande (S540), en fonction des informations de carte de la carte d'opération cible et des informations de position cible, du robot pour qu'il se déplace vers la destination d'opération ;
**caractérisé en ce que** la détermination (S520), sur la base de la relation de connexion de carte préétablie, de la position de transfert vers laquelle le robot se déplace depuis la position actuelle vers la carte d'opération cible comprend :
la détermination (S710), en fonction de la relation d'association entre la pluralité de cartes d'opération pré-construites, d'un chemin de carte que le robot emprunte depuis une carte d'opération actuelle où se trouve la position actuelle vers la carte d'opération cible ; et
pour deux cartes d'opération associées sur le chemin de carte, l'obtention de coefficients de confiance de points caractéristiques compris dans la région commune des deux cartes d'opération associées, et la détermination d'une position correspondant à un point caractéristique ayant le coefficient de confiance le plus élevé comme position de transfert ; le coefficient de confiance représentant une probabilité que le point caractéristique soit le même point sur les deux cartes d'opération.

2. Procédé de commande de robot selon la revendication 1, dans lequel la détermination (S510), en fonction des informations de position cible de l'opération actuelle du robot, de la carte d'opération cible comprenant les informations de position cible parmi la pluralité de cartes d'opération pré-construites comprend :
l'obtention (S511) d'informations de carte de la carte d'opération actuelle du robot et des informations de position cible ; et
la détermination (S512), dans un cas où les informations de carte de la carte d'opération actuelle ne comprennent pas les informations de position cible, de la carte d'opération cible comprenant les informations de position cible en parcourant, en fonction des informations de position cible, d'autres cartes d'opération.

3. Procédé de commande de robot selon la revendication 1, dans lequel la commande (S530) du robot pour qu'il se déplace vers la position de transfert et le changement (S530) des cartes, jusqu'à ce que le robot se déplace vers la carte d'opération cible, comprend :
le déplacement vers chaque position de transfert dans l'ordre en fonction du chemin de carte, et le changement, à chaque position de transfert, de la carte d'opération actuelle en une carte d'opération associée à la carte d'opération actuelle, jusqu'à ce que le robot se déplace vers la carte d'opération cible.

4. Procédé de commande de robot selon l'une quelconque des revendications 1 à 3, dans lequel la commande (S540), en fonction des informations de carte de la carte d'opération cible et des informations de position cible, du robot pour qu'il se déplace vers la destination d'opération comprend :
la transformation (S541) des informations de position cible en informations de coordonnées cible dans un système de coordonnées de carte ; et
la commande (S542), en fonction des informations de carte de la carte d'opération cible et des informations de coordonnées cible, du robot pour qu'il se déplace vers la destination d'opération correspondant aux informations de coordonnées cible.

5. Procédé de commande de robot selon l'une quelconque des revendications 1 à 4, dans lequel un processus de préétablissement de la relation de connexion de carte comprend :
la construction (S210) et l'obtention (S210) d'une pluralité de cartes d'opération, chaque carte d'opération comprenant des informations de coordonnées de carte et une pluralité d'informations de points caractéristiques sur la carte d'opération ;
l'exécution (S220), pour deux cartes d'opération quelconques, d'une mise en correspondance de caractéristiques en fonction des informations de points caractéristiques comprises dans chacune des deux cartes d'opération, et
la détermination (S220), dans un cas où au moins un groupe de points caractéristiques est apparié, des deux cartes d'opération comme deux cartes d'opération associées ; et
la détermination (S230), pour les deux cartes d'opération associées, de la région commune entre les deux cartes d'opération en fonction des points caractéristiques appariés.

6. Robot (600), comprenant :
un ou plusieurs processeurs (601) ; et
une mémoire (602), stockant des instructions informatiques, les instructions informatiques étant utilisées pour amener le ou les processeurs (601) à :
déterminer, en fonction d'informations de position cible d'une opération actuelle du robot, une carte d'opération cible comprenant les informations de position cible parmi une pluralité de cartes d'opération pré-construites, les informations de position cible étant des informations de position correspondant à une destination d'opération du robot ;
déterminer, sur la base d'une relation de connexion de carte préétablie, une position de transfert vers laquelle le robot se déplace depuis une position actuelle vers la carte d'opération cible, la position de transfert étant une position dans une région commune entre deux cartes d'opération adjacentes, la relation de connexion de carte préétablie comprenant une relation d'association entre la pluralité de cartes d'opération pré-construites et une région commune entre des cartes d'opération associées ;
commander le robot pour qu'il se déplace vers la position de transfert et changer de cartes, jusqu'à ce que le robot se déplace vers la carte d'opération cible ; et
commander, en fonction des informations de carte de la carte d'opération cible et des informations de position cible, le robot pour qu'il se déplace vers la destination d'opération ;
**caractérisé en ce que** la détermination, sur la base de la relation de connexion de carte préétablie, de la position de transfert vers laquelle le robot se déplace depuis la position actuelle vers la carte d'opération cible comprend :
la détermination, en fonction de la relation d'association entre la pluralité de cartes d'opération pré-construites, d'un chemin de carte que le robot emprunte depuis une carte d'opération actuelle où se trouve la position actuelle vers la carte d'opération cible ; et
pour deux cartes d'opération associées sur le chemin de carte, l'obtention de coefficients de confiance de points caractéristiques compris dans la région commune des deux cartes d'opération associées, et la détermination d'une position correspondant à un point caractéristique ayant le coefficient de confiance le plus élevé comme position de transfert ; le coefficient de confiance représentant une probabilité que le point caractéristique soit le même point sur les deux cartes d'opération.

7. Robot (600) selon la revendication 6, dans lequel une instruction informatique qui amène le ou les processeurs (601) à déterminer, en fonction des informations de position cible de l'opération actuelle du robot (600), la carte d'opération cible comprenant les informations de position cible parmi la pluralité de cartes d'opération pré-construites, amène en outre le ou les processeurs (601) à :
obtenir des informations de carte de la carte d'opération actuelle du robot (600) et les informations de position cible ; et
déterminer, dans un cas où les informations de carte de la carte d'opération actuelle ne comprennent pas les informations de position cible, la carte d'opération cible comprenant les informations de position cible en parcourant, en fonction des informations de position cible, d'autres cartes d'opération.

8. Robot (600) selon la revendication 6, dans lequel l'instruction informatique qui amène le ou les processeurs (601) à commander le robot (600) pour qu'il se déplace vers la position de transfert et change les cartes, jusqu'à ce que le robot (600) se déplace vers la carte d'opération cible, amène en outre le ou les processeurs (601) à :
se déplacer vers chaque position de transfert dans l'ordre en fonction du chemin de carte, et changer, à chaque position de transfert, la carte d'opération actuelle en une carte d'opération associée à la carte d'opération actuelle, jusqu'à ce que le robot (600) se déplace vers la carte d'opération cible.

9. Robot (600) selon l'une quelconque des revendications 6 à 8, dans lequel une instruction informatique qui amène le ou les processeurs (601) à commander le robot (600) pour qu'il se déplace vers la destination d'opération en fonction des informations de carte de la carte d'opération cible et des informations de position cible, amène en outre le ou les processeurs (601) à :
transformer les informations de position cible en informations de coordonnées cible dans un système de coordonnées de carte ; et
commander, en fonction des informations de carte de la carte d'opération cible et des informations de coordonnées cible, le robot (600) pour qu'il se déplace vers la destination d'opération correspondant aux informations de coordonnées cible.

10. Robot (600) selon l'une quelconque des revendications 6 à 9, dans lequel le ou les processeurs (601) sont en outre configurés pour préétablir la relation de connexion de carte en :
construisant et obtenant une pluralité de cartes d'opération, chaque carte d'opération comprenant des informations de coordonnées de carte et une pluralité d'informations de points caractéristiques sur la carte d'opération ;
exécutant, pour deux cartes d'opération quelconques, une mise en correspondance de caractéristiques en fonction des informations de points caractéristiques comprises dans chacune des deux cartes d'opération, et déterminant, dans un cas où au moins un groupe de points caractéristiques est apparié, les deux cartes d'opération comme deux cartes d'opération associées ; et
déterminant, pour les deux cartes d'opération associées, la région commune entre les deux cartes d'opération en fonction des points caractéristiques appariés.

11. Support de stockage non transitoire, stockant des instructions informatiques, les instructions informatiques étant utilisées pour amener un ordinateur à exécuter le procédé de commande de robot selon l'une quelconque des revendications 1 à 5.
